# EUROPÄISCHE PATENTSCHRIFT

(11) **EP 0 558 135 B1**
(45) Veröffentlichungstag und Bekanntmachung des Hinweises auf die Patenterteilung: **26.06.1996**
(21) Anmeldenummer: 93200480.7
(22) Anmeldetag: 19.02.1993
(51) Int. Cl.: B23K 26/00, H01J 35/10

(54) **Verfahren zum Erzeugen eines Musters in der Oberfläche eines Werkstücks**
Procedure for generating pattern in the surface of a work piece
Procédé pour engendrer un dessin dans la surface d'une pièce d'oeuvre

(30) Priorität: 27.02.1992 DE 4206002
(43) Veröffentlichungstag der Anmeldung: 01.09.1993
(73) Patentinhaber: Philips Patentverwaltung GmbH, 22335 Hamburg (DE); Philips Electronics N.V., 5621 BA Eindhoven (NL)
(72) Erfinder: Jacob, Heinz-Jürgen, W-2000 Norderstedt (DE)
(74) Vertreter: Hartmann, Heinrich, Dipl.-Ing.

(56) Entgegenhaltungen:
- DE-A- 3 900 730
- DE-A- 3 930 573
- PATENT ABSTRACTS OF JAPAN vol. 5, no. 180 (C-079)19. November 1981 & JP-A-56 105 479 (MITSUBISHI ELECTRIC CORP) 21 August 1981

## Beschreibung

Die Erfindung betrifft ein Verfahren gemäß dem Oberbegriff des Anspruchs 1.

Aus der DE-OS 39 30 573 ist eine Drehanoden-Röntgenröhre bekannt, deren aus Wolfram bestehender Anodenteller mit einem Rillenmuster versehen ist. Dieses Rillenmuster soll den Anodenteller gegen Verdrehen gegenüber dem ihn tragenden Rotorstiel sichern, dessen dem Anodenteller zugewandte Schulter mit einem entsprechenden Rillenmuster versehen ist. Diese Rillenmuster werden durch ein photolithographisches Ätzverfahren hergestellt.

In der DE-OS 39 00 730 ist eine Drehanoden-Röntgenröhre mit einem Spiralrillenlager beschrieben. Das Spiralrillenlager weist einen mit dem Röhrenkolben verbundenen feststehenden Teil auf und einen zusammen mit dem Anodenteller rotierenden Teil, der den feststehenden Teil umschließt. Der feststehende Teil ist mit einem Muster von Spiralrillen versehen, die eine Breite von einigen zehntel Millimetern und eine Tiefe von 0,01 mm bis 0,02 mm aufweisen. Zwischen den Lagerteilen befindet sich als Schmiermittel eine Galliumlegierung, deren Dampfdruck auch im Betrieb der Röntgenröhre niedrig bleibt. Die Lagerteile bestehen aus Molybdän, weil die meisten anderen Metalle mit der agressiven Galliumlegierung chemisch reagieren.

Das Spiralrillenmuster wird ebenfalls mittels eines photolithographischen Ätzverfahrens hergestellt, wobei ca. zehn Arbeitsgänge erforderlich sind. Die Herstellung des Spiralrillenmusters ist daher teuer. Die dafür erforderlichen Ätzlösungen belasten die Umwelt erheblich.

Weiterhin ist aus der JP-A-56-105479 ein Verfahren bekannt, bei dem ein Molybdänfilm in einer oxidierenden Atmosphäre mit einem Laserstrahl erwärmt wird, wobei der Film auf seiner gesamten Dicke an der Erwärmungsstelle durch Sublimation verdampft.

Aufgabe der vorliegenden Erfindung ist es, ein Verfahren der eingangs genannten Art so auszugestalten, daß sich eine geringere Umweltbelastung bzw. niedrigere Kosten ergeben. Diese Aufgabe wird erfindungsgemäß durch das im Anspruch 1 angegebene Verfahren gelöst.

Bei der Erfindung oxidiert das Material des Werkstückes im Erwärmungspunkt, und das so gebildete Oxid sublimiert (verdampft) unter Hinterlassung eines Hohlraums, ohne daß es zum Schmelzen des Materials kommt, weil die Energiezufuhr so gesteuert ist, daß die Schmelztemperatur nicht erreicht, aber die Sublimationstemperatur überschritten wird. Das Schmelzen des Materials würde bei Molybdän eine hohe thermische Leistung erfordern, weil die Schmelztemperatur sehr hoch liegt (ca. 2.600 Grad). Zum andern würde sich bei der Herstellung von Rillen an deren Rändern Aufwerfungen ergeben, die bei einem Spiralrillenlager unerwünscht sind. Bei der Erfindung hingegen genügt schon eine vergleichsweise geringe thermische Leistung, weil z.B. Molybdän bereits bei ca. 800° oxidiert und sublimiert.

Die Erwärmung erfolgt mittels einer Laseranordnung. Der Einsatz von Lasern zur Materialbearbeitung ist an sich seit langem bekannt. Beim Schneiden bzw. Trennen ist es auch bekannt, einen Sauerstoffstrahl auf den vom Laser erwärmten Punkt zu richten (vergl. z.B. "Laser welding, cutting and surface treatment", The welding Institute, England 1984, Seiten 28-32). Danach bewirkt die Sauerstoff- oder Preßluftzufuhr in dem erwärmten Punkt (dem Laserspot) einerseits eine erhöhte Leistungsdichte im Laserspot und andererseits das Ausblasen des geschmolzenen Materials aus der Trennstelle. Die Energiedichte wird dadurch erhöht, daß das Material im Laserspot oxidiert. Dadurch wird die Absorption der Laserstrahlung wesentlich vergrößert (jedenfalls bei der von einem CO₂-Laser erzeugten Wellenlänge), so daß sich eine bessere thermische Ankopplung an den Laserstrahl ergibt. Außerdem stellt das Oxidieren eine thermische Reaktion dar, die zusätzlich Während bei dem bekannten Verfahren also die Sauerstoffzufuhr in Verbindung mit der thermischen Leistung im Laserspot dem Schmelzen des Materials dient, ist bei der Erfindung ein solches Schmelzen unerwünscht. Es wird daher entsprechend weniger Energie zugeführt, so daß nur eine Oxidation und anschließend eine Sublimation (Verdampfen) auftreten kann. Die Erfindung ist bei Lagerteilen von Röntgenröhren aus Molybdän oder einer Molybdänlegierung anwendbar.

Die Umweltbelastung durch das erfindungsgemäße Verfahren ist vergleichsweise gering, weil nur das durch Sublimation abgetragene Material gasförmig als Oxid anfällt. Die Herstellung geht im Vergleich zum Ätzen schneller vonstatten und erfordert geringere Investitionen.

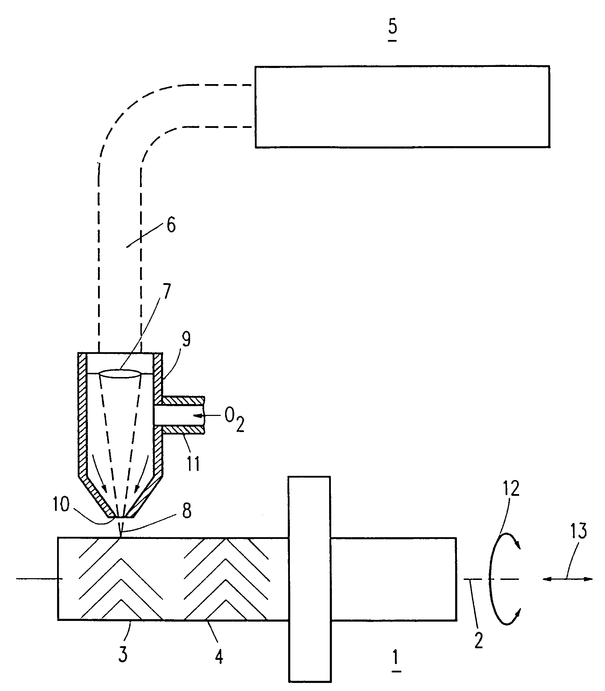

Die Erfindung wird nachstehend anhand der Zeichnung näher erläutert.

Das zu bearbeitende Werkstück 1 besteht aus Molybdän und ist ein Teil eines Spiralrillenlagers einer Drehanoden-Röntgenröhre, beispielsweise gemäß der DE-OS 39 00 730. Es ist rotationssymmetrisch bezüglich der Achse 2 gestaltet und besitzt auf seiner Oberfläche zwei Zonen 3 und 4 mit einem fischgrätartigen Rillenmuster. In der Zone 4 ist dieses Rillenmuster bereits komplettt dargestellt, während es in der Zone 3 noch vervollständigt werden muß. Die Rillen eines solchen Musters haben eine Breite von z.B. 0,22 mm und eine Tiefe von 0,015 mm. Der Zwischenraum zwischen zwei benachbarten Rillen sollte so breit sein wie die Rillen selbst (0,22 mm). Die Zeichnung gibt die Größenverhältnisse nur schematisch und nicht maßstäblich wieder.

Das Erzeugen der Rillen erfolgt mittels eines schematisch dargestellten Lesers 5, vorzugsweise eines Nd:YAG-Lasers.Vorzugsweise wird dieser Laser kontinuierlich betrieben (cw-Betrieb), so daß die Temperatur zeitlich und räumlich konstant bleibt. Der Lasersträhl wird mittels eines gestrichelt angedeuteten Lichtleiters 6 oder mit Hilfe geeigneter Umlenkspiegel einem Objektiv 7 zugeführt, das den Strahl auf die Oberfläche des Werkstücks fokussiert, so daß ein senkrecht zur Oberfläche des Werkstücks gerichteter Laserspot mit einer Abmessung von ca. 0,3 mm entsteht. Die Leistungsdichte in diesem Spot sollte möglichst homogen sein, was am besten erreicht wird, wenn der Laser in einem TEM₀₀-Mode betrieben wird, jedenfalls aber in einer niedrigen Modenordnung.

Wird der Laser 5 mit einer Leistung von ca. 200-300 Watt betrieben, dann ergeben sich unter atmosphärischen Bedingungen auf der Oberfläche des Werkstücks 1 praktisch keine Veränderungen. Wird jedoch ein Sauerstoff-(oder Preßluft-)Strähl auf die vom Laser erhitzte Stelle gerichtet, dann ergibt sich bei der gleichen elektrischen Leistung eine Oxidation und anschließend eine Sublimation, bei der das erzeugte Oxid unter Hinterlassung eines Hohlraums verdampft. Zu diesem Zweck ist die Fokussieroptik 7 in an sich bekannter Weise in einer Düse 9 befestigt, die eine Öffnung 10 enthält, durch die hindurch der Laserstrahl auf das Werkstück auftrifft, wobei er gleichzeitig von einem Sauerstoffstrahl umspült wird, der über eine seitlich angeordnete Eintrittsöffnung 11 zugeführt wird. Die Menge des durch die Sauerstoffzufuhr oxidierten und sublimierten Molybdäns nimmt zunächst stark mit dem Sauerstoffdurchsatz zu. Oberhalb eines bestimmten Sauerstoffdurchsatzes ändert sich diese Menge nur noch unwesentlich. Der Sauerstoffdurchsatz sollte daher so gewählt sein, daß er oberhalb dieses Wertes liegt. Bei einem Abstand der Düsenöffnung vom Werkstück von 3,5 mm und einem Durchmesser der Düsenöffnung von 3,5 mm liegt ein geeigneter Wert bei 15 l Sauerstoff/min.

Die Rillentiefe hängt außer vom Sauerstoffdurchsatz der Größe und Intensitätsverteilung des Laserspots und der Laserleistung auch noch von der Vorschubgeschwindigkeit ab, mit der der Laserspot über die Oberfläche des Werkstücks geführt wird. Dieser "Vorschub" erfolgt dadurch, daß das Werkstück 1 in eine nicht näher dargestellte numerisch gesteuerte CNC-Maschine eingesetzt wird, die in der Lage ist, das Werkstück 1 um seine Symmetrieachse 2 rotieren zu lassen (Pfeil 12) und die darüberhinaus dieses Werkstück in axialer Richtung verschieben kann (Pfeil 13). Bei kombinierter Ausführung dieser Bewegungen läßt sich eine der Rillen des Fischgrätmusters erzeugen. Eine geeignete Vorschubgeschwindigkeit für eine Rillentiefe von 0,015 mm bei einer Rillenbreite von 220 mm und einer Leserleistung von rund 200 W liegt bei ca. 360 mm/min.

Die Rillenbreite läßt sich durch Variation der Größe des Laserspots variieren, während ihre Tiefe durch die Leser leistung bzw. die Vorschubgeschwindigkeit verändert werdenkann. Andere geometrische Muster von Vertiefungen können erhalten werden, wenn das Werkstück relativ zum Laserspot auf andere Weise geführt wird, wozu die Programmierung der CNC-Maschine, in der das Werkstück 1 eingespannt ist, entsprechend zu ändern ist.

Die auf diese Weise hergestellten Rillen weisen keinerlei seitliche Aufwerfungen auf und haben im Rillengrund eine geringe Rauhtiefe und eine weitgehend geglättete Oberfläche.

## Patentansprüche

1. Verfahren zum Erzeugen eines Musters von Vertiefungen in der Oberfläche eines aus Molybdän oder Molybdänlegierung bestehenden Lagerteils (1) einer Röntgenröhre,
dadurch gekennzeichnet, daß das Lagerteil durch einen Laserstrahl (8) punktförmig erwärmt wird, wobei der Erwärmungspunkt entsprechend dem Muster der Vertiefungen über die Oberfläche geführt wird, daß auf den Erwärmungspunkt ein Sauerstoffstrahl gerichtet wird und daß die Energiezufuhr zum Erwärmungspunkt so gesteuert wird, daß die Schmelztemperatur des Werkstückmaterials nicht erreicht wird, jedoch die Sublimationstemperatur des durch die Erwärmung gebildeten Oxids überschritten wird.

2. Verfahren nach Anspruch 1,
gekennzeichnet durch seine Verwendung zur Herstellung eines Spiralrillenlagers, wobei in wenigstens einem der aus Molybdän bestehenden Lagerteile ein Muster von Spiralrillen erzeugt wird.

## Claims

1. A method of generating a pattern of depressions in the surface of a bearing part (1) of an X-ray tube made of molybdenum or a molybdenum alloy,
characterized in that the bearing part is heated spotwise by a laser beam (8), the heating spot being conducted over the surface in accordance with the pattern of depressions, in that a jet of oxygen is directed at the heating spot, and in that the energy supply to the heating spot is so controlled that the melting temperature of the workpiece material is not reached but the sublimation temperature of the oxide formed by the heating is exceeded.

2. A method as claimed in Claim 1,
characterized by its use for the manufacture of a spiral groove bearing, whereby a pattern of spiral grooves is generated in at least one of the bearing parts made of molybdenum.

## Revendications

1. Procédé pour usiner un motif de cavités dans la surface d'une partie de palier (1) en molybdène ou un alliage de molybdène d'un tube à rayons X, caractérisé en ce que la partie de palier est chauffée ponctuellement par un rayon laser (8), le point d'échauffement étant guidé sur la surface conformément au motif des cavités, un jet d'oxygène est dirigé sur le point d'échauffement et l'apport d'énergie au point d'échauffement est conduit de telle sorte que la température de fusion de la matière de la pièce à usiner ne soit pas atteinte, mais que la température de sublimation de l'oxyde formé par l'échauffement soit dépassée.

2. Procédé suivant la revendication 1, caractérisé par son utilisation pour la fabrication d'un palier à rainures en spirale, un motif de rainures en spirale étant produit dans au moins une des parties de palier constituées de molybdène.
